# EUROPÄISCHE PATENTANMELDUNG

(11) **EP 1 134 180 A2**
(43) Veröffentlichungstag der Anmeldung: **19.09.2001**
(21) Anmeldenummer: 01105826.0
(22) Anmeldetag: 08.03.2001
(51) Int. Cl.: B66F 9/075, B62D 53/08

(54) **Gabelstapler mit einem Anhängerbolzen**

(30) Priorität: 09.03.2000 DE 10011442
(71) Anmelder: STILL GMBH, D-22113 Hamburg (DE)
(72) Erfinder: Bavendiek, Rainer, Dr., 21465 Wentorf (DE); Arping, Franz-Josef, Dipl.-Ing., 220307 Hamburg (DE); Mittmann, Heribert, Dipl.-Ing., 20535 Hamburg (DE); Scharr, Dirk, Dipl.-Ing., 22083 Hamburg (DE); Jahns, Claus-Peter, Dipl.-Ing., 21107 Hamburg (DE); Rademacher, Frank, Dipl.-Ing., 22143 Hamburg (DE)
(74) Vertreter: Kasseckert, Rainer

(57) **Zusammenfassung**

Ein Gabelstapler weist ein Gegengewicht (1) auf, in dem ein Anhängebolzen (2) vertikal angeordnet ist, der zwischen einer Öffnungs- und einer Schließstellung auf- und abbewegbar ist. Erfindungsgemäß ist der Anhängebolzen (2) durch mindestens einen Aktuator (3) anheb- und absenkbar, der vom Arbeitsbereich der Bedienperson des Gabelstaplers aus fernbedienbar ist. Dadurch ist das Anhängen oder Lösen eines Anhängers möglich, ohne den Arbeitsplatz der Bedienperson verlassen zu müssen. Der Aktuator (3) ist bevorzugt in das Gegengewicht integriert (1) und als hydraulisches oder pneumatisches Zylinder-Kolben-Aggregat ausgebildet. Hierbei ist es günstig, wenn der Anhängebolzen (2) mit dem Kolben des Zylinder-Aggregats fest verbunden oder einstückig mit diesem gebildet ist. Der Aktuator (3), der auch als Elektro-Aktuator ausgeführt sein kann, steht mit einem Bedienungselement in Wirkverbindung, das im Arbeitsbereich der Bedienperson des Gabelstaplers angeordnet ist. Es ist eine den Bereich des Anhängebolzens (2) erfassende Kamera (6) vorgesehen, die an einen Monitor angeschlossen ist, der im Arbeitsbereich der Bedienperson in deren Sichtfeld angeordnet ist. Die Kamera (6) kann in das Gegengewicht (1) integriert sein. Eine optische und/oder akustische Signaleinrichtung (7) ist bei in Betrieb befindlichem Aktuator (3) wirksam.

## Beschreibung

Die Erfindung betrifft einen Gabelstapler mit einem Gegengewicht, in dem ein Anhängebolzen vertikal angeordnet ist, der zwischen einer Öffnungs- und einer Schließstellung auf- und abbewegbar ist.

Gattungsgemäße Gabelstapler können nicht nur zum Stapeln von Gütern sondern auch zum Ziehen von Anhängern eingesetzt werden. Dabei muß die Bedienperson zum Befestigen und Lösen eines Anhängers durch Betätigen des Anhängebolzens ihren Arbeitsplatz auf dem Gabelstapler verlassen. Gelegentlich ist es dabei auch erforderlich, mehrmals vom Gabelstapler abzusteigen, um diesen nach Inaugenscheinnahme der Position des Anhängers bzw. der Anhängerdeichsel in eine zum Befestigen des Anhängebolzens geeignete Position rangieren zu können.

Der vorliegenden Erfindung liegt die Aufgabe zu Grunde, einen Gabelstapler der eingangs genannten Art zur Verfügung zu stellen, mit dem das Anhängen oder Lösen eines Anhängers möglich ist, ohne den Arbeitsplatz der Bedienperson verlassen zu müssen.

Diese Aufgabe wird erfindungsgemäß dadurch gelöst, daß der Anhängebolzen durch mindestens einen Aktuator anheb- und absenkbar ist, der vom Arbeitsbereich der Bedienperson des Gabelstaplers aus fernbedienbar ist. Der Anhängebolzen wird somit durch eine vom Aktuator erzeugte äußere Kraft angehoben und abgesenkt, wobei dies vom Arbeitsbereich der Bedienperson des Fahrers aus erfolgt.

Gemäß einer vorteilhaften Ausgestaltung der Erfindung ist der Aktuator in das Gegengewicht integriert, wodurch einerseits kein zusätzlicher Platz außerhalb der Fahrzeugkontur benötigt wird und andererseits der Aktuator geschützt gegen äußere Einflüsse untergebracht ist.

Die vom Aktuator auf den Anhängebolzen aufgebrachte äußere Kraft kann hydraulisch, pneumatisch, elektrisch oder auf andere geeignete Weise erzeugt werden. Besonders günstig ist es, wenn der Aktuator als hydraulisches oder pneumatisches Zylinder-Kolben-Aggregat ausgebildet ist.

Dabei ist es aus Platzgründen und im Hinblick auf einen günstigen Kraftfluß von Vorteil, wenn der Anhängebolzen koaxial zum Kolben des Zylinder-Kolben-Aggregats angeordnet ist.

Der Anhängebolzen kann mit dem Kolben des Zylinder-Aggregats fest verbunden oder einstückig mit diesem gebildet sein.

Gemäß anderen günstigen Ausgestaltung der Erfindung ist der Aktuator als Elektro-Aktuator ausgebildet, z.B. als elektromechanischer Gewindetrieb.

Zweckmäßigerweise steht der Aktuator mit einem Bedienungselement in Wirkverbindung, das im Arbeitsbereich der Bedienperson des Gabelstaplers angeordnet ist. Dieses Bedienungselement kann beispielsweise ein hydraulisches Steuerventil betätigen.

Gemäß einer besonders vorteilhafte Weiterbildung der Erfindung ist eine den Bereich des Anhängebolzens erfassende Kamera vorgesehen, die an einen Monitor angeschlossen ist, der im Arbeitsbereich der Bedienperson in deren Sichtfeld angeordnet ist. Dadurch kann die Bedienperson bei geöffnetem Anhängebolzen den Gabelstapler in eine zur Verbindung mit der Anhängerdeichsel geeignete Position rangieren, ohne den Arbeitsplatz verlassen zu müssen.

Um die Kamera vor Beschädigungen zu schützen, ist sie bevorzugt in das Gegengewicht integriert.

Eine Ausgestaltung der Erfindung sieht vor, daß der Aktuator mit einer Steuer- und/ oder Regeleinrichtung in Wirkverbindung steht, durch die der Anhängebolzen in Öffnungsstellung nach Ablauf einer vorbestimmten Zeitspanne in Schließstellung fahrbar ist.

Aus Sicherheitsgründen erweist es sich als günstig, wenn eine optische und/oder akustische Signaleinrichtung vorgesehen ist, die bei in Betrieb befindlichem Aktuator wirksam ist.

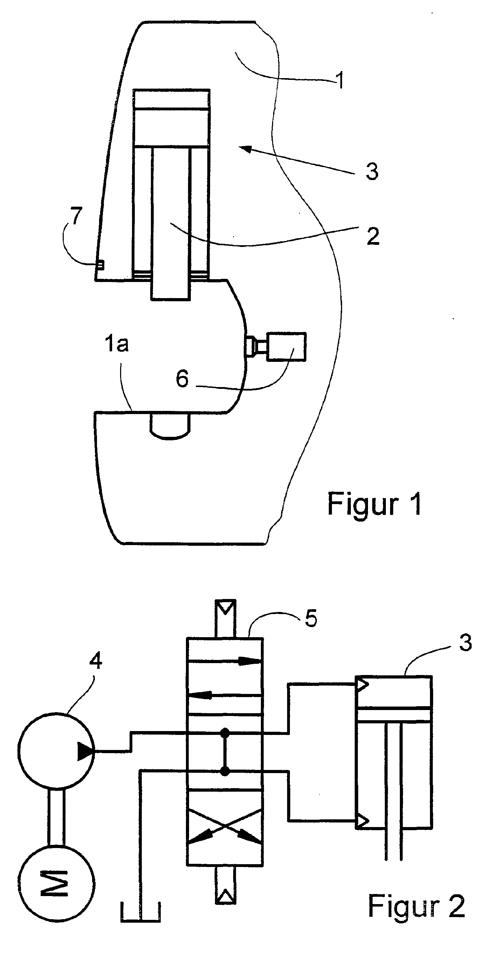

Weitere Vorteile und Einzelheiten der Erfindung werden anhand des in den schematischen Figuren dargestellten Ausführungsbeispieles näher erläutert. Dabei zeigt
- Figur 1: einen Schnitt durch das Gegengewicht eines Gabelstaplers und
- Figur 2: ein Schaltbild eines hydraulisch betriebenen Aktuators.

In einem Gegengewicht 1 eines Gabelstaplers befindet sich eine Ausnehmung 1a zur Aufnahme einer Anhängerdeichsel, die mittels eines vertikal angeordneten Anhängebolzens 2 befestigbar ist. Zu diesem Zweck ist der Anhängebolzen 2 von einer in der Figur gezeigten Öffnungsstellung nach vertikal unten in eine Schließstellung bewegbar.

Der Anhängebolzen 2 ist im vorliegenden Ausführungbeispiel als Kolbenstange eines in das Gegengewicht 1 integrierten Aktuators 3 ausgebildet. Dieser Aktuator 3 weist die Form eines doppelt wirkenden hydraulischen Zylinder-Kolben-Aggregats auf und ist mit Hilfe eines elektrisch fern gesteuerten und an eine Pumpe 4 angeschlossenen Steuerventiles 5 (siehe Figur 3) betätigbar.

Das Steuerventil 5 steht mit einem nicht dargestellten Bedienungselement in Wirkverbindung, das sich zweckmäßigerweise in Reichweite der auf dem Gabelstapler befindlichen Bedienperson befindet.

Im Gegengewicht 1 ist eine den Bereich des Anhängebolzens 2 erfassende Kamera 6 angeordnet. Diese ist an eine in den Figuren nicht dargestellten Monitor angeschlossen, der sich im Arbeitsbereich der Bedienperson in deren Sichtfeld befindet. Dadurch kann die Bedienperson bei geöffnetem Anhängebolzen 2 den Gabelstapler in eine zur Verbindung mit der Anhängerdeichsel geeignete Position rangieren, ohne den Arbeitsplatz verlassen zu müssen.

Der Aktuator 3 kann mit einer Steuer- und/oder Regeleinrichtung in Wirkverbindung steht, durch die der Anhängebolzen 2 in Öffnungsstellung nach Ablauf einer vorbestimmten Zeitspanne in Schließstellung fahrbar ist.

Eine optische Anzeigevorrichtung 7, beispielsweise eine blinkende LED-Anzeige, signalisiert, daß der Aktuator 3 in Betrieb ist und sich der Anhängebolzen bewegt.

## Patentansprüche

1. Gabelstapler mit einem Gegengewicht, in dem ein Anhängebolzen vertikal angeordnet ist, der zwischen einer Öffnungs- und einer Schließstellung auf- und abbewegbar ist, **dadurch gekennzeichnet, daß** der Anhängebolzen (2) durch mindestens einen Aktuator (3) anheb- und absenkbar ist, der vom Arbeitsbereich der Bedienperson des Gabelstaplers aus fernbedienbar ist.

2. Gabelstapler nach Anspruch 1, **dadurch gekennzeichnet, daß** der der Aktuator (3) in das Gegengewicht integriert (1) ist.

3. Gabelstapler nach Anspruch 1 oder 2, **dadurch gekennzeichnet, daß** der Aktuator (3) als hydraulisches oder pneumatisches Zylinder-Kolben-Aggregat ausgebildet ist.

4. Gabelstapler nach Anspruch 3, **dadurch gekennzeichnet, daß** der Anhängebolzen (2) koaxial zum Kolben des Zylinder-Kolben-Aggregats angeordnet ist.

5. Gabelstapler nach Anspruch 4, **dadurch gekennzeichnet, daß** der Anhängebolzen (2) mit dem Kolben des Zylinder-Aggregats fest verbunden oder einstückig mit diesem gebildet ist.

6. Gabelstapler nach Anspruch 1 oder 2, **dadurch gekennzeichnet, dass** der Aktuator (3) als Elektro-Aktuator ausgebildet ist.

7. Gabelstapler nach einem der Ansprüche 1 bis 6, **dadurch gekennzeichnet, daß** der Aktuator (3) mit einem Bedienungselement in Wirkverbindung steht, das im Arbeitsbereich der Bedienperson des Gabelstaplers angeordnet ist.

8. Gabelstapler nach einem der Ansprüche 1 bis 7, **dadurch gekennzeichnet, daß** eine den Bereich des Anhängebolzens (2) erfassende Kamera (6) vorgesehen ist, die an einen Monitor angeschlossen ist, der im Arbeitsbereich der Bedienperson in deren Sichtfeld angeordnet ist.

9. Gabelstapler nach Anspruch 8, **dadurch gekennzeichnet, daß** die Kamera (6) in das Gegengewicht (1) integriert ist.

10. Gabelstapler nach einem der Ansprüche 1 bis 9, **dadurch gekennzeichnet, daß** der Aktuator (3) mit einer Steuer- und/oder Regeleinrichtung in Wirkverbindung steht, durch die der Anhängebolzen (2) in Öffnungsstellung nach Ablauf einer vorbestimmten Zeitspanne in Schließstellung fahrbar ist.

11. Gabelstapler nach einem der Ansprüche 1 bis 10, **dadurch gekennzeichnet, daß** eine optische und/oder akustische Signaleinrichtung (7) vorgesehen ist, die bei in Betrieb befindlichem Aktuator (3) wirksam ist.
